Europäisches Patentamt

European Patent Office

Office européen des brevets

(11) Publication number: **0 094 783**
**B1**

(12) **EUROPEAN PATENT SPECIFICATION**

(45) Date of publication of patent specification: **06.09.89**

(51) Int. Cl.⁴: **A 47 J 39/02**

(21) Application number: **83302645.3**

(22) Date of filing: **10.05.83**

(54) Electric food warmer.

(30) Priority: **14.05.82 GB 8214155**
**02.09.82 GB 8225060**

(43) Date of publication of application:
**23.11.83 Bulletin 83/47**

(45) Publication of the grant of the patent:
**06.09.89 Bulletin 89/36**

(84) Designated Contracting States:
**AT BE CH DE FR GB IT LI NL SE**

(56) References cited:
**DE-A-2 336 308**
**FR-A-1 251 540**
**FR-A-2 423 621**
**FR-E- 43 427**
**GB-A-1 297 004**
**US-A-2 976 386**
**US-A-3 026 582**
**US-A-3 629 554**

(73) Proprietor: **SALTON LIMITED**
**Princess Street Failsworth**
**Manchester M35 OHS (GB)**

(72) Inventor: **Kendrick, Philip John**
**31 Frere Avenue**
**Fleet Hampshire (GB)**

(74) Representative: **Massey, Alexander et al**
**MARKS & CLERK Suite 301 Sunlight House Quay**
**Street**
**Manchester M3 3JY (GB)**

Courier Press, Leamington Spa, England.

# Decsription

The present invention relates to an electric food warmer.

It is known from US-A-2976386 to provide a food warmer comprising a planar dish-supporting surface constituted by a glass plate having a front surface and an electrical heating element in the form of a patterned layer attached to a rear surface of the glass plate. Means in the form of a metal frame supports the glass plate above furniture level, and electrical connecting means is provided to connect the electrical heating element with a power supply. Heat shielding means is in the form of a bottom plate is attached to the metal frame below and spaced from the glass plate.

FR-E-43427 dicloses an electrical food warmer in the form of a roasting dish having a base defined by two spaced glass plates with an electrical heating element sandwiched therebetween.

It is an object of the present invention to provide an electrical food warmer of the general character disclosed in US-A-2976386 employing a second and lower glass plate as a heating shielding means and with the two glass plates being clamped together in spaced but peripherally-sealed relationship to resist exchange of heated air between the inter-glass space and atmosphere and ingress of water during, for example, a cleaning operation.

According to the invention there is provided an electrical food warmer comprising a planar dish-supporting surface constituted by a first transparent or translucent glass plate having a front surface and an electrical heating element in the form of a patterned layer attached to the rear surface, means for raising the support surface above furniture level, electrical connecting means for connecting the electrical heating element with a power supply, and heat shielding means extending over the rear surface of the glass plate, the first glass plate, heat shielding means and electrical connecting means being mounted in a mounting structure, the electric food warmer being characterised in that the heating shielding means comprises a second transparent or translucent glass plate generally co-extensive with and spaced from the first glass plate, and in that the mounting structure comprises strip means spacing and sealing each of two opposed edges of the glass plates, complementary clamping members gripping and holding together two other opposed edges of the glass plates, and securing means connecting the clamping means and the strip means together.

An embodiment of the invention is hereafter described with reference to the accompanying drawings in which:

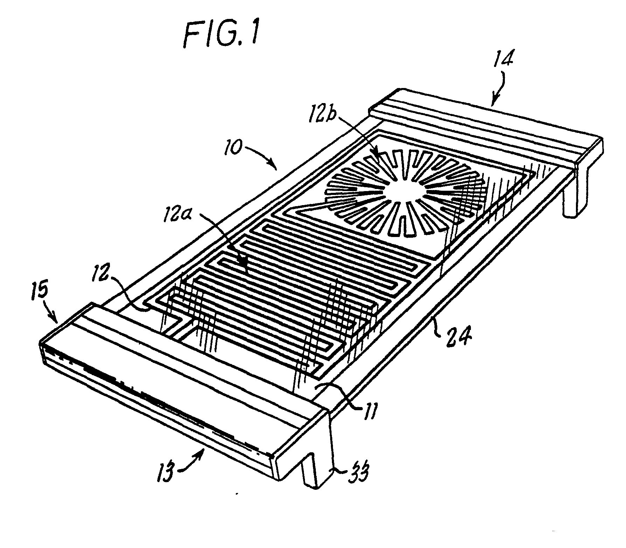

Figure 1 is a perspective view of a food warming tray in accordance with the invention,

Figure 2 is a plan view, partly cut away, of the right hand side of the tray of Figure 1,

Figure 3 is a longitudinal sectional view of the right-hand side portion of the tray of Figure 1,

Figure 4 is a transverse sectional view corresponding with Figure 3, and

Figure 5 is a sectional view corresponding generally to part of Figure 4 showing an alternative means of sealing the side edges of the plates.

In the drawings there is shown a food warming tray generally indicated at 10 comprising a first (upper) glass plate 11 having a plain upper or front surface and an electrical heating element 12 in the form of a patterned layer attached to the rear surface. Since the plate 11 is transparent, the patterned heating element is visible and is arranged in an attractive pattern with an extensive rectangular generally lower temperature area 12a and a generally higher temperature area 12b in a circular arrangement. The heating element may be conventionally formed by fusing a conductive glass frit on the rear surface of the plate 11.

The device includes a mounting structure in the form of end pieces 13,14 each being of two-component plastics mouldings bolted together and housing an electrical connecting means for the heating element terminating in a pronged connector 15.

A second (lower) glass plate 16 is positioned by the mounting means so as to be generally coextensive with and spaced from the first glass plate 11. The intervening space between the glass plates is sealed.

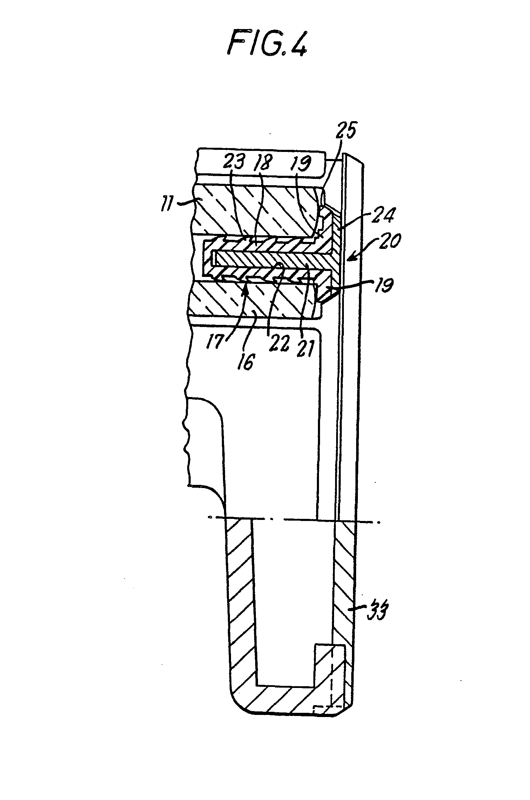

The sealing is accomplished at the longitudinal side edges by the interposition between the plates of a compound sealing strip. As shown more particularly in Figure 4 a first resiliently compressible sealing strip 17 has a tongue portion 18 frictionally engaged between plates 11,16 and flange portions 19 extending against the adjacent edge surfaces of the plates. The tongue portion 18 is hollow, having a cavity 22 extending longitudinally and exposed between the flanges 19. A rigid strip 20 has a tongue portion 21 engaged within the cavity 22 of the compressible strip. The tongue portion 18 of the compressible strip is provided with longitudinally extending barbed projections 23 on its outer surfaces. When the strip is inserted in place the barbed projections 23 are bent over towards the flanges 19 thus presenting an extensive sealing surface against the interior surfaces of the glass plates and sealing the interior space against exchange of heated air and the possible ingress of water e.g. during household cleaning operations.

The rigid strip 20 has a continuous flange 24 which generally covers the flanges 19, the flanges 19 and 24 being chamfered to provide a pleasing appearance. The inner surface of at least the upper of the flanges 19 may be partly cut-away towards the tongue so as to ensure a continuous seal at its upper edge 25.

It will be apparent from Figure 4 that the flanges 19 and 24 do not extend as far as the edges of the plates. This gives a positive advantage that the edge of the upper glass plate is exposed to allow easy cleaning and to avoid the entrapment of spilt liquid.

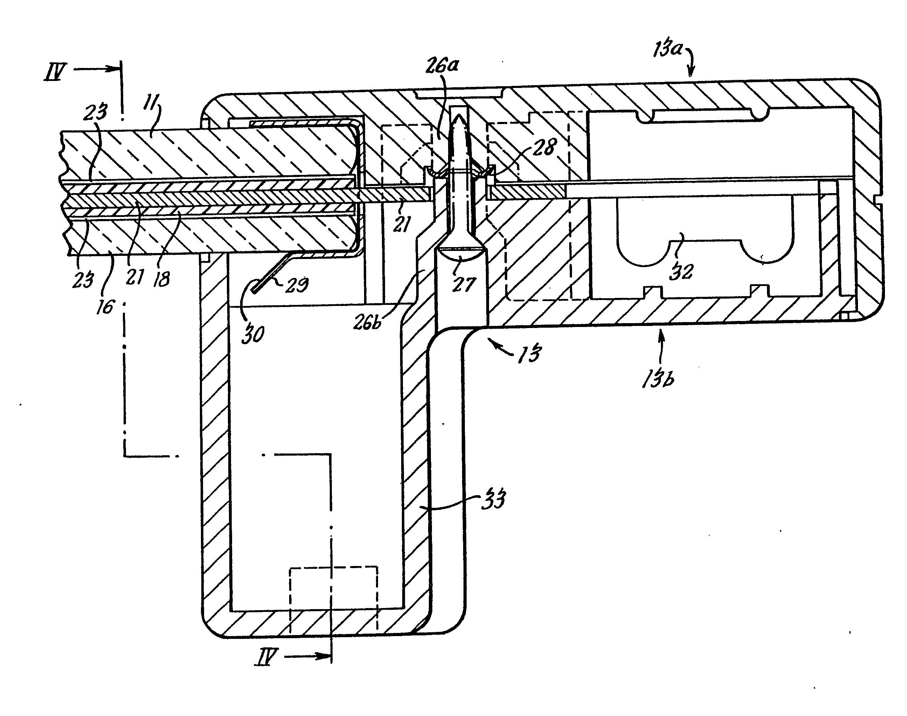

The end pieces 13 and 14 are in mirror image relationship, end piece 13 enclosing the electrical connections, and only this end piece will be described in detail with reference to Figures 3 and 4. As shown, the end piece 13 is formed as separate upper and lower mouldings respectively 13a and 13b which have complementary moulded formations 26a,26b for receiving three screws 27, attached by means of threaded washers 28.

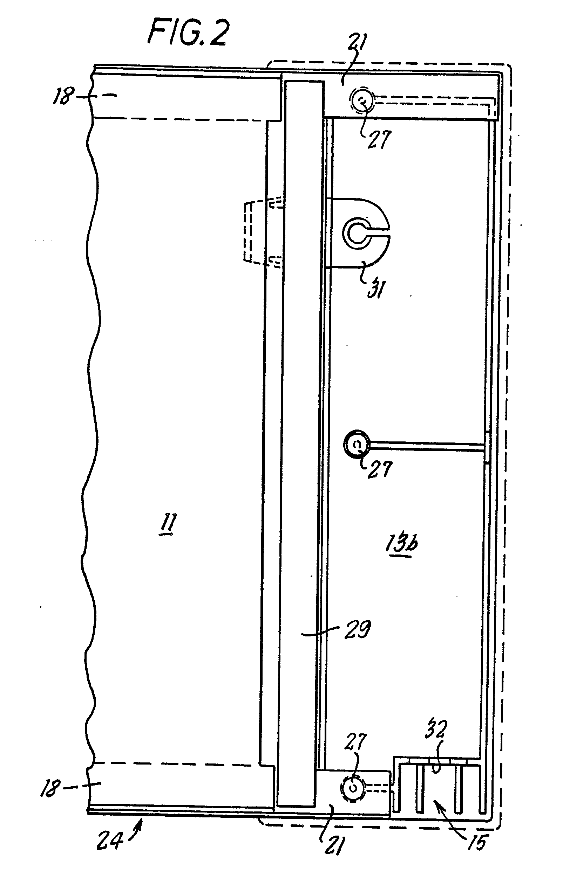

The narrow edges of the pair of plates 11,16 are each enclosed in a steel generally U-sectioned extrusion 29 which may have an interior lining 30 of softer material. The compressible flange 17 terminates at the edges of the plates but the rigid flange 20 extends within the hollow interior of the moulding 13 or 14 as shown in Figure 2 and two of the screws 27 project through apertures in the tongue portion 21. When the glass sheets are fitted in place within the mould halves and the mould halves screwed together, the plates are squeezed together compressing the projections 23 of the compressible strip 17.

The electrical connections are generally conventional. As shown in Figure 2 a plate 31 provides connections with the ends of the heating element which are connected within the hollow interior of the end piece 13 to the prongs 15 which extend within a cavity 32 formed within the end piece 13.

For a medium sized tray of overall length about 60cm, the element may suitably be of 150 watts, generating a surface temperature of 120°C. Since the element will normally have a positive temperature coefficient the wattage given is based upon the hot current. This compares very favourably with a similar tray of the type having a metal casing and metal bottom shielding where to achieve the same surface temperature a power rating of 180 watts (hot current) is required.

The compressible strip 17 may be formed of any suitable plastics material such as PVC. It is not necessary for the strip to be specially heat resistant since lateral conduction of heat through the glass is poor. The rigid strip 20 is conveniently of aluminium. The end pieces 13,14 may be of any suitable moulded plastics material. Preferably both plates are of tempered glass with polished edges but glass of lower specification or heat resistant glass may be utilised where appropriate for the upper or lower plate. The upper glass plate is preferably of 6mm thickness and the lower plate of 4mm thickness. The spacing is e.g. 5mm.

Although not shown, further sealing strips may be inserted between the plates II,16 extending along the lateral edges within the channel piece 29. A switch, fuse and indicator light may be incorporated in the cavity 32.

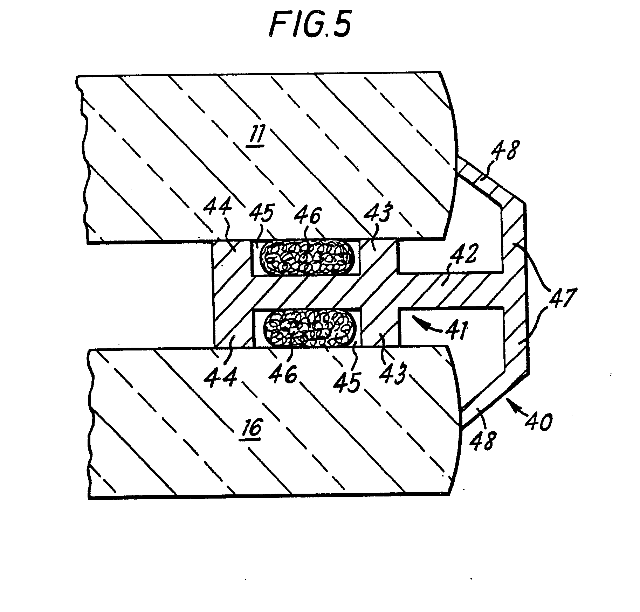

Figure 5 shows an alternative and more preferable method of spacing and sealing the longitudinal side edges of the plates at each side. The aluminium spacer at 21 of Figure 4 is modified as shown at 40. The tongue 41 is formed with a longitudinally extending web 42 having as shown in cross-section spaced limbs 43, 44 projecting from each side so as to abut and space respective plates 11, 16. Flanges 47 projecting on each side of the tongue 41 have oblique portions 48 abutting respective plates.

Within the spaces 45 on each side of the web 42 is located a bead 46 of adhesive. When applied, the bead of adhesive, which may be of about 2mm diameter, stands proud of the outer edges of the limbs 43, 44 and is compressed to the thickness or depth of the spaces 45, which may be e.g. 1.5mm, when the plates 11, 16 are positioned. The adhesive is preferably a siliconecellastic rubber adhesive which cures by absorption of humidity and remains resilient while adhering to the glass and the aluminium tongue. Suitable forms of adhesive are: (Trade Mark) EVODE general purpose adhesive, Silicon Products adhesive RTV 732 and Engineering Polymers adhesive RTV 702.

In the tray shown, both plates are transparent and a completely novel appearance is produced. Features of the table surface underneath can be viewed through the food warmer which is generally less obtrusive and blends in with the surroundings. The construction is also very much simplified with two end mouldings which serve to mount the plates and provide leg formations 33. If it desired to increase the efficiency, the lower plate 16 may be rendered upwardly reflective e.g. by silvering its bottom surface, or heat reflective glass may be employed. This greatly reduces the loss of heat downwardly by radiation and increases the heat available for warming food.

It is also possible to provide the spaced plates as a completely sealed, bonded and at least partly evacuated unit which reduces the heat loss downwards very considerably. Silvering may again be employed. This feature may be employed with advantage where higher temperatures are employed e.g. in portable cooking units.

## Claims

1. An electrical food warmer comprising a planar dish-supporting surface constituted by a first transparent or translucent glass plate (11) having a front surface and an electrical heating element (12) in the form of a patterned layer attached to the rear surface, means (33) for raising the support surface above furniture level, electrical connecting means (15) for connecting the electrical heating element (12) with a power supply, and heat shielding means extending over the rear surface of the glass plate (11), the first glass plate (11), heat shielding means and electrical connecting means being mounted in a mounting structure, the electric food warmer being characterised in that the heating shielding means comprises a second transparent or translucent glass plate (16) generally co-extensive with and spaced from the first glass plate (11), and in that the mounting structure comprises strip means spacing and sealing each of two opposed edges of the glass plates (11 and 16), complementary clamping members (13, 14) gripping and holding together two other opposed edges of the glass plates (11 and 16), and securing means (27) connecting the clamping means (13, 14) and the strip means together.

2. An electric food warmer according to claim 1 characterised in that the strip means (17,20) comprises a resiliently compressible sealing strip (17) having a tongue portion (18) frictionally engaged between adjacent side edges of the glass plates (11, 16) and flange portions (24) extending against the adjacent edge surfaces of the glass plates (11, 16).

3. An electric food warmer according to claim 2 characterised in that the tongue portion (18) is hollow, a rigid strip (20) having a tongue portion (21) being engaged within the tongue portion (18) of the compressible sealing strip (17).

4. An electric food warmer according to claim 1 characterised in that the strip means (40) comprises a rigid separator strip (40) having a tongue portion (41) at least partly engaged between adjacent side edges of the glass plates (11, 16) and flange portions (47, 48) extending against the adjacent edge surfaces of the glass plates (11, 16), adhesive sealing material (46) being located between the inner surface of each plate (11, 16) and a respective recessed portion (45) of the tongue portion (41).

5. An electric food warmer according to claim 4 characterised in that the tongue portion (41) is formed (in cross-section) with a generally central web (42) and at least two spaced limbs (43, 44) projecting on each side of the web (42) so as to abut the inner surfaces of the glass plates (11, 16), a bead (46) of adhesive sealing material being located between the limbs (43, 44) on each side of the web (42).

6. An electric food warmer according to claim 4 or 5 characterised in that the sealing material (46) is a siliconecellastic rubber adhesive.

7. An electric food warmer according to any one claims 1 to 7 characterised in that complementary clamping members (13, 14) comprise complementary moulded plastics mounting members (13a, 13b).

8. An electric food warmer according to any one of claims 1 to 7 characterised in that the rear glass plate (16) is rendered reflective towards the front glass plate (11).

9. An electric food warmer according to any one claims 1 to 8 characterised in that the intervening space between the glass plates (11, 16) is at least partly evacuated.

**Patentansprüche**

1. Eine elektrische Wärmevorrichtung für Speisen mit einer planaren Auflagefläche für Schüsseln, die durch eine erste transparente oder lichtdurchlässige Glasplatte (11) mit einer Vorderseite und einem elektrischen Heizelement (12) in Form einer an der Rückseite angebrachten gemusterten Schicht gebildet ist, mit Mitteln (33) zur Erhöhung der Auflagefläche über die Möbelhöhe, mit elektrischen Anschlußmitteln (15) zum Anschluß des elektrischen Heizelements (12) an eine Stromversorgung, und mit einer Hitzeschutzvorrichtung, welche sich über die Rückseite der Glasplatte (11) erstreckt, wobei die erste Glasplatte (11), die Hitzeschutzvorrichtung und die elektrischen Anschlußmittel in einer Montageeinheit montiert sind, und die elektrische Wärmevorrichtung for Speisen dadurch gekennzeichnet ist, daß die Hitzeschutzvorrichtung eine zweite transparente oder lichtdurchlässige Glasplatte (16) umfaßt, die sich im Abstand von der ersten Glasplatte (11) und im allgemeinen entsprechend dieser erstreckt, und daß die Montageeinheit Streifenelemente, die jeweils zwei gegenüberliegende Ränder der Glasplatten (11 und 16) voneinander beabstanden und abdichten, komplementäre Klemmelemente (13,14), die zwei andere gegenüberliegende Ränder der Glasplatten (11 und 16) umgreifen und zusammenhalten, und Sicherungsmittel (27) aufweist, die die Klemmelemente (13,14) und die Streifenelemente miteinander verbinden.

2. Elektrische Wärmevorrichtung für Speisen nach Anspruch 1, dadurch gekennzeichnet, daß die Streifenelemente (17,20) einen elastisch kompressiblen Dichtstreifen (17) umfassen, der einen Zungenabschnitt (18) aufweist, der reibschlüssig zwischen benachbarten Seitenrändern der Glasplatten (11,16) und Flanschabschnitten (24) angeordnet ist, die sich an den benachbarten Randflächen der Glasplatten (11,16) erstrecken.

3. Elektrische Wärmevorrichtung für Speisen nach Anspruch 2, dadurch gekennzeichnet, daß der Zungenabschnitt (18) hohl ist, wobei ein harter Streifen (20), der einen Zungenabschnitt (21) aufweist, innerhalb des Zungenabschnitts (18) des kompressiblen Dichtstreifens (17) in Eingriff ist.

4. Elektrische Wärmevorrichtung für Speisen nach Anspruch 1, dadurch gekennzeichnet, daß die Streifenelemente (40) einen harten Trennstreifen (40) mit einem Zungenabschnitt (41) aufweisen, der zumindest teilweise zwischen benachbarten Seitenrändern der Glasplatten (11,16) und Flanschabschnitten (47,48) in Eingriff ist, die sich an den benachbarten Randflächen der Glasplatten (11,16) erstrecken, wobei adhäsives Dichtmaterial (46) zwischen der Innenfläche einer jeden Platte (11,16) und einem entsprechenden, vertieft ausgebildeten Teil (45) des Zungenabschnitts (41) angeordnet ist.

5. Elektrische Wärmevorrichtung für Speisen nach Anspruch 4, dadurch gekennzeichnet, daß der Zungenabschnitt (41) (im Querschnitt) mit einem im allgemeinen zentralen Steg (42) und mindestens zwei voneinander beabstandeten Armen (43,44) ausgebildet ist, die an jeder Seite des Steges (42) derart vorstehen, daß sie an den Innenflächen der Glasplatten (11,16) anliegen, wobei ein Wulst (46) eines adhäsiven Dichtmaterials zwischen den Armen (43,44) an jeder Seite des Steges (42) angeordnet ist.

6. Elektrische Wärmevorrichtung für Speisen nach Anspruch 4 oder 5, dadurch gekennzeichnet, daß das Dichtmaterial (46) ein silikonelastischer Gummikleber ist.

7. Elektrische Wärmevorrichtung für Speisen nach einem der Ansprüche 1 bis 6, dadurch gekennzeichnet, daß komplementäre Klemmelemente (13,14) komplementäre, aus Kunststoff geformte Befestigungselemente (13a, 13b) umfassen.

8. Elektrische Wärmevorrichtung für Speisen nach einem der Ansprüche 1 bis 7, dadurch gekennzeichnet, daß die hintere Glasplatte (16) zur vorderen Glasplatte (11) hin reflektierend ausgebildet ist.

9. Elektrische Wärmevorrichtung für Speisen nach einem der Ansprüche 1 bis 8, dadurch gekennzeichnet, daß der zwischen den Glasplatten (11,16) liegende Raum zumindest teilweise evakuiert ist.

**Revendications**

1. Chauffe-plat électrique comprenant une face porte-plat plane constituée d'une première plaque de verre transparente ou translucide (11) comportant une face frontale et d'un élément chauffant électrique (12) sous la forme d'une couche à dessins fixèe à la face arrière, des moyens (33) pour élever la face de support au-dessus du niveau d'alimentation, des moyens de raccordement électriques (15) pour raccorder l'élément chauffant électrique à une source de courant électrique, et des moyens d'isolation thermiques s'étendant par-dessus la face arrière de la plaque de verre (11), la première plaque de verre (11), les moyens d'isolation thermique et les moyens de raccordement électriques étant montés dans une structure de montage, le chauffe-plat électrique étant caractérisé en ce que le moyen d'isolation thermique comprend une seconde plaque de verre transparente ou translucide (16) qui est généralement co-extensve avec la première plaque de verre (11) et espacée de celle-ci, et en ce que la structure de montage comprend des moyens de bande écartant et joignant d'une manière étanche chacun des deux côtés opposés des plaques de verre (11) et (16), des moyens de serrage complémentaires (13, 14) serrant et maintenant ensemble deux autres bords opposés des plaques de verre (11) et (16), et des moyens de fixation (27) assemblant entre eux les moyens de serrage (13, 14), et les moyens de bande.

2. Chauffe-plat électrique selon la revendication 1, caractérisé en ce que les moyens de bandes (17, 20) comprennent une bande d'étanchéité (17) compressible élastiquement, comportant une partie de langue (18) en liaison de friction entre les bords de côté adjacents des plaques de verre (11, 16) et des parties de bride (24) s'étendant contre les surfaces de bord adjacentes des plaques de verre (11, 16).

3. Chauffe-plat électrique selon la revendication 2, caractérisé en ce que la partie de langue (18) est creuse, une bande rigide (20) ayant une partie de langue (21) étant engagée à l'intérieur de la partie de langue (18) de la bande d'étanchéité compressible (17).

4. Chauffe-plat électrique selon la revendication 1, caractérisé en ce que les moyens de bande (40) comprennent une bande de séparation rigide (40) ayant une partie de langue (41) engagée au moins partiellement entre les bords latéraux adjacents des plaques de verre (11, 16) et des parties de bride (47, 48) s'étendant contre les surfaces latérales adjacentes des plaques de verre (11, 16) un matériau d'étanchéité adhésif (46) étant disposé entre la surface intérieure de chaque plaque (11, 16) et une partie creuse respective (45) de la partie de langue (41).

5. Chauffe-plat électrique selon la revendication 4, caractérisé en ce que la partie de langue (41) est formée (en coupe transversale), avec une bande centrale (42) et au moins deux branches espacées (43, 44) faisant saillie de chaque côté de la bande (42) de façon à buter contre les faces intérieures des plaques de verre (11, 16), un bourrelet (46) en matériau d'étanchéité adhésif étant placé entre les branches (43, 44) de chaque côté de la bande (42).

6. Chauffe-plat électrique selon la revendication 4 ou 5, caractérisé en ce que le matériau d'étanchéité (46) est un adhésif en caoutchouc silicone-cellastique.

7. Chauffe-plat électrique selon l'une quelconque des revendications 1 à 6, caractérisé en ce que les éléments de serrage complémentaires (13, 14) comprennent des éléments de montage en plastique moulé complémentaires (13a, 13b).

8. Chauffe-plat électrique selon l'une quelconque des revendications 1 à 7, caractérisé en ce que la plaque de verre arrière (16) est rendue réfléchissante vers la plaque de verre frontale (11).

9. Chauffe-plat électrique selon l'une quelconque des revendications 1 à 8, caractérisé en ce que l'espace compris entre les plaques de verre (11, 16) est au moins partiellement sous vide.

# FIG.1

# FIG.2

# FIG.4

# FIG.5